# FASCICULE DE BREVET EUROPEEN

(11) **EP 1 914 126 B1**
(45) Date de publication et mention de la délivrance du brevet: **10.11.2010**
(21) Numéro de dépôt: 07118545.8
(22) Date de dépôt: 16.10.2007
(51) Int. Cl.: F16F 7/12, B60R 21/34, B62D 25/08

(54) **Face avant de véhicule automobile comportant un absorbeur d'energie**
Frontseite eines Kraftfahrzeuges umfassend einen Energieabsorber
Front face of an automotive vehicle comprising a shock absorber

(30) Priorité: 20.10.2006 FR 0609231
(43) Date de publication de la demande: 23.04.2008
(73) Titulaire: Valeo Systèmes Thermiques, 78321 Le Mesnil Saint-Denis Cedex (FR)
(72) Inventeur: Guinehut, Sébastien, 92130 Issy-les-Moulineaux (FR); Lambert Anne-Laure, 92380 Garches (FR)

(56) Documents cités:
- EP-A- 1 749 710
- DE-A1- 4 307 836
- FR-A1- 2 801 030
- JP-A- 5 340 438
- JP-A- 2003 306 096
- US-B1- 6 702 345

## Description

L'invention concerne une face avant de véhicule automobile munie d'un absorbeur d'énergie.

Une face avant est un élément de structure susceptible d'intégrer divers équipements du véhicule, tels que, par exemple, projecteurs, clignotants, avertisseur sonore, échangeur thermique, groupe moto-ventilateur ou module de refroidissement complet. Une telle face avant est connue du document FR 2 801 030 A1.

La face avant, ainsi pourvue de ses équipements, constitue un élément unitaire préparé et livré par l'équipementier, prêt à être monté sur le véhicule par le constructeur. Le montage de ce module unitaire se fait par raccordement à des éléments de structure latéraux du véhicule, tels que les longerons, ailes ou coques.

La face avant, du fait de son positionnement, est l'élément de contact qui est sollicité lors d'un choc frontal. Elle est notamment prévue pour absorber des chocs.

La variété de ces chocs amène les organismes gouvernementaux à mettre en place des réglementations de plus en plus strictes afin de protéger les conducteurs et leur environnement.

Il est déjà connu d'équiper les faces avant de véhicule automobile de pare-chocs destinés à absorber tout ou partie des chocs frontaux des véhicules pour protéger les passagers. Ces pare-chocs sont utilisés pour absorber les chocs avec des éléments extérieurs très variés, tels que d'autres véhicules, des murs ou des poteaux.

Toutefois, les dispositifs de l'art antérieur ne proposent pas une protection optimale de la jambe et du reste du corps du piéton qui sont susceptibles d'être endommagés lors d'un "choc piéton". Ce choc piéton désigne l'interaction entre la partie avant d'un véhicule et la jambe (qui inclut l'ensemble fémur-genou-tibia) d'un piéton qu'il percute ainsi que sa hanche ou sa tête lorsque c'est un enfant.

L'invention vise à améliorer la situation.

Elle propose à cet effet une face avant comportant les caractéristiques de la revendication 1 avec un absorbeur d'énergie tel que défini précédemment dans lequel le support comporte au moins une ouverture et dans lequel, en cas de choc, les parois sont aptes à se replier sur elles-mêmes de façon à autoriser une pénétration d'au moins une partie du corps dans l'ouverture du support.

Ainsi, ce dispositif permet d'obtenir une déformation du corps de l'absorbeur d'énergie sous effort quasi constant maximisant ainsi l'énergie absorbée dans un encombrement donné avec, en plus, la particularité de réduire au maximum le volume résiduel. Par conséquent, cet absorbeur permet d'optimiser l'énergie absorbée lors du choc et plus particulièrement lors d'un choc hanche, tout en minimisant le volume occupé.

D'autres avantages et caractéristiques de l'invention apparaîtront mieux à la lecture de la description à titre illustratif et non limitatif d'exemples issus des figures sur les dessins annexés dans lesquels :
- La figure 1 est une vue en perspective d'une face avant selon l'invention où le corps de l'absorbeur d'énergie est détaché du reste de la face avant.
- La figure 2 est une vue de dessus, en perspective, plus détaillée du corps de l'absorbeur d'énergie.
- La figure 3 représente une vue de dessous en perspective du corps de l'absorbeur d'énergie représenté à la figure 2.
- La figure 4 représente de manière schématique les différentes étapes de compression de l'absorbeur d'énergie suite à un choc hanche, selon un plan de coupe IV-IV indiqué à la figure 2.

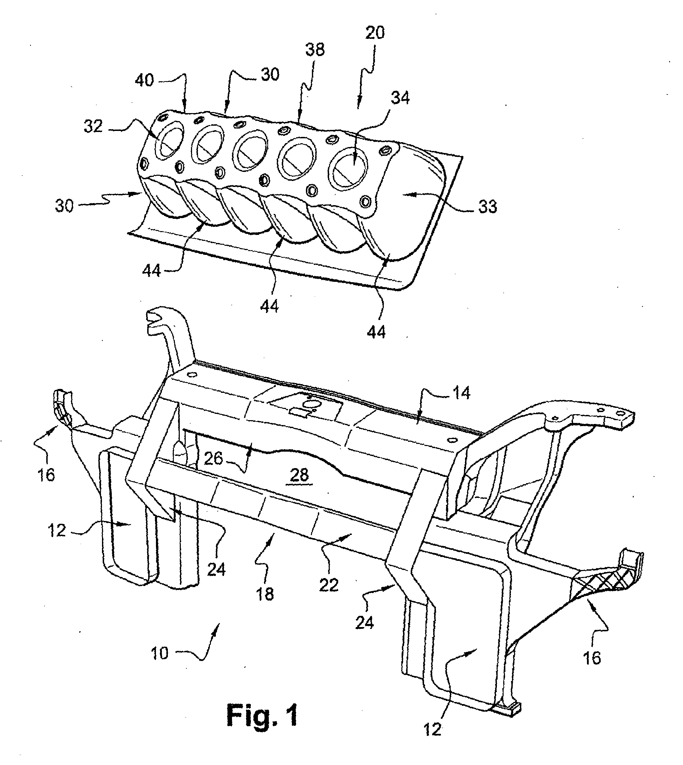

Comme illustré à la figure 1, l'invention concerne une face avant 10 de véhicule automobile. La face avant 10 se présente sous la forme d'une armature comprenant par exemple deux jambages 12 sensiblement verticaux disposés respectivement du côté droit et du côté gauche du véhicule. Ces deux jambages 12, encore appelés "montants" ou "quarts", sont réunis entre eux, dans l'exemple, par une traverse 14 sensiblement horizontale, prévue entre leurs extrémités supérieures.

Selon l'exemple représenté, à partir de chaque montant 12 s'étend vers l'extérieur un bras 16 sensiblement horizontal. Les bras 16 et les montants 12 correspondants définissent un logement destiné à recevoir notamment une optique de phare (non représentée).

La face avant est munie en outre d'un absorbeur d'énergie. Cet absorbeur d'énergie est formé par la combinaison d'un support 18 et d'un corps 20, le support 18 et le corps 20 étant assujettis l'un à l'autre.

Le support 18 est lié à ladite armature de la face avant. Le support 18 est composé, dans le mode de réalisation illustré à la figure 1, de quatre éléments : deux plans inclinés 24 et deux traverses horizontales 22, 26. Ces quatre éléments sont disposés de manière à définir une ouverture 28 dans le support 18. Les deux plans inclinés 24 sont fixés aux jambages 12 de la face avant 10. Les traverses horizontales 22 et 26 sont, quant à elles, parallèles entre elles et parallèles à la traverse supérieure 14. Dans ce mode de réalisation, le support 18 est lié à la traverse supérieure 14 et aux montants 12. Le support 18 est disposé de manière à permettre une orientation inclinée de l'absorbeur d'énergie par rapport à un plan défini par la traverse supérieure 14 et les montants 12.

Dans ce mode réalisation, le support est composé de quatre éléments et lié à l'armature de la face avant par des moyens d'accrochage conventionnels. On pourra toutefois prévoir que le support ne soit formé que par une seule pièce réalisée, par exemple, par moulage, et comportant au moins une ouverture. Le moulage du support pourra aussi être réalisé en même temps que le moulage de tout ou partie de la face avant et formé ainsi une seule et unique pièce.

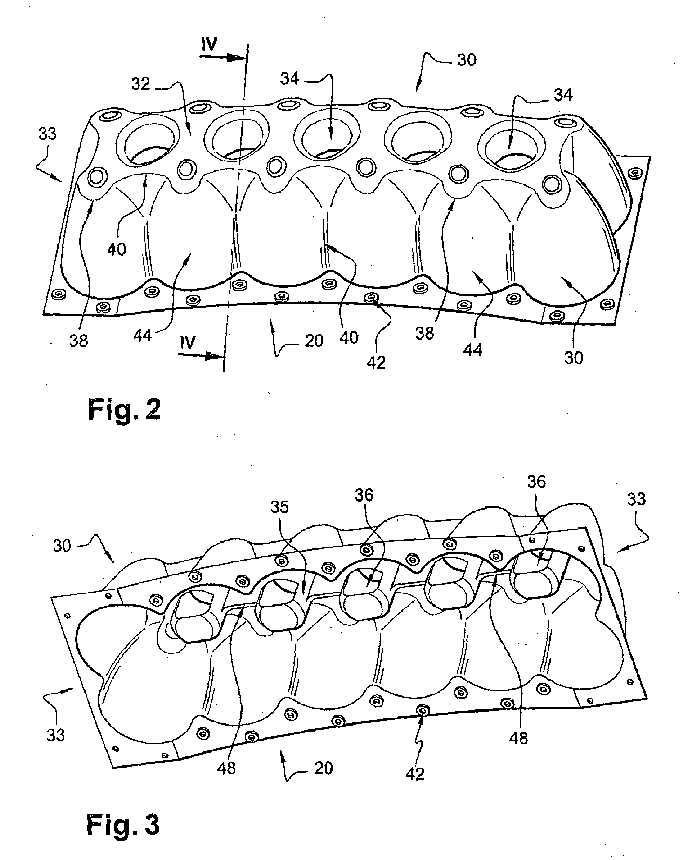

Comme plus particulièrement représenté aux figures 2 et 3, le corps 20 comporte une ou des parois. Dans l'exemple représenté, le corps comporte au moins deux parois dites transversales 30, sensiblement parallèles entre elles et une troisième paroi 32 reliant les parois transversales 30. Les parois transversales 30 sont aptes à se replier sur elles-mêmes de façon à autoriser la pénétration d'au moins une partie du corps 20 dans l'ouverture 28 du support 18.

Le corps 20 de l'absorbeur de choc est réalisé, notamment, en un matériau plastique. On pourra, par exemple, utiliser un PP-EPDM (copolymère de polypropylène renforcé avec 10% de talc et d'élastomère modifié).

Le corps 20 permet ainsi d'assurer, d'une part, un niveau d'effort acceptable et stable pour un choc piéton et plus particulièrement un choc hanche et, d'autre part, cette structure permet d'offrir une déformation répétable. Autrement dit, suite à un choc, le corps de l'absorbeur reprend dans sa forme initiale.

Dans le mode de réalisation représenté ici, le corps 20 de l'absorbeur d'énergie comporte en outre deux autres parois 33 qui relient les extrémités des deux parois transversales 30 de manière à définir un parallélépipède présentant un pourtour sensiblement rectangulaire visible notamment à la figure 3 de la présente demande.

Le corps 20 est une structure comportant au moins un coté ou face ouverte. La face ouverte est la face se situant en vis-à-vis du support 18. Dans l'exemple représenté, le corps 20 comporte cinq cotés et une seule face ouverte.

Comme illustré à la figure 3, le parallélépipède est ouvert sur l'un de ces cotés ce qui permet, lors d'un choc, d'assurer une compression totale du corps 20, autrement dit en minimisant le volume résiduel. En conséquent, l'énergie absorbée est maximisée.

La troisième paroi 32, par exemple une paroi supérieure, forme un couvercle du corps 20 et comporte au moins un enfoncement 34 en direction de l'ouverture du support. L'enfoncement 34 est apte à passer dans l'ouverture 28 du support 18 lors du repliement des parois 30 sur elles-mêmes. L'enfoncement 34 comporte au moins un ajour 36. Comme visible sur la figure 3, la paroi de l'enfoncement est réalisée en continuité de matière avec la paroi supérieure ou couvercle 32 du corps de l'absorbeur. Dans l'exemple représenté, l'enfoncement 34 est de forme cylindrique et comporte deux ajours 36 en vis-à-vis l'une de l'autre (dont un seul est visible sur la figure 3). Les ajours sont situés sur la paroi latérale 35 de l'enfoncement 34. L'enfoncement 34 est équidistant des parois 30 transversales.

Les parois transversales 30 sont ondulées de manière à former une alternance de crêtes 38 et de creux 40.

Telle que représentées à la figure 2, les parois transversales 30 forment une succession d'obus ou d'ogives 44 adjacentes.

Les crêtes 38 de chaque paroi transversale 30 sont en vis-à-vis les unes des autres. De même, les creux 40 sont eux aussi en vis-à-vis les uns des autres. Les enfoncements 34 sont situés au droit de deux creux 40 situés l'un en face de l'autre. Autrement dit, les sommets de deux dites premières ogives 44 adjacentes situés sur une des deux parois transversales et les sommets de deux dites secondes ogives 44 adjacentes situés sur l'autre paroi transversale et en vis-à-vis des deux dites premières ogives permettent de définir un carré ou un rectangle et l'enfoncement 34 se situe au centre de ce carré ou rectangle.

Comme on peut le voir sur la figure 3, au moins deux enfoncements adjacents 34 sont reliés par une nervure 40. La nervure 40 est issue du couvercle 32 et perpendiculaire à celui-ci.

Autrement dit, le corps 20 est réalisé de plusieurs motifs répétés : un enfoncement 34 cylindrique est intercalé entre quatre cônes ou ogives 44 de manière à définir une structure en quinconce. De plus, une nervure est intercalée entre deux enfoncements 34.

En outre, des moyens de fixation 42 sont prévus pour attacher le corps 20 au support 18, tels que par exemple des vis, clip ou rivets plastiques.

Un mode de réalisation non représenté propose que le corps de l'absorbeur d'énergie comporte des ajours ou des évidements supplémentaires. Ces évidements pourront se situer sur les parois transversales 30 et/ou les parois 33 reliant les parois transversales. Une variante de réalisation place les ajours supplémentaires entre les ogives 44. Ces ajours pourront être disposés dans la zone des parois 30, 33 voisine du support 18.

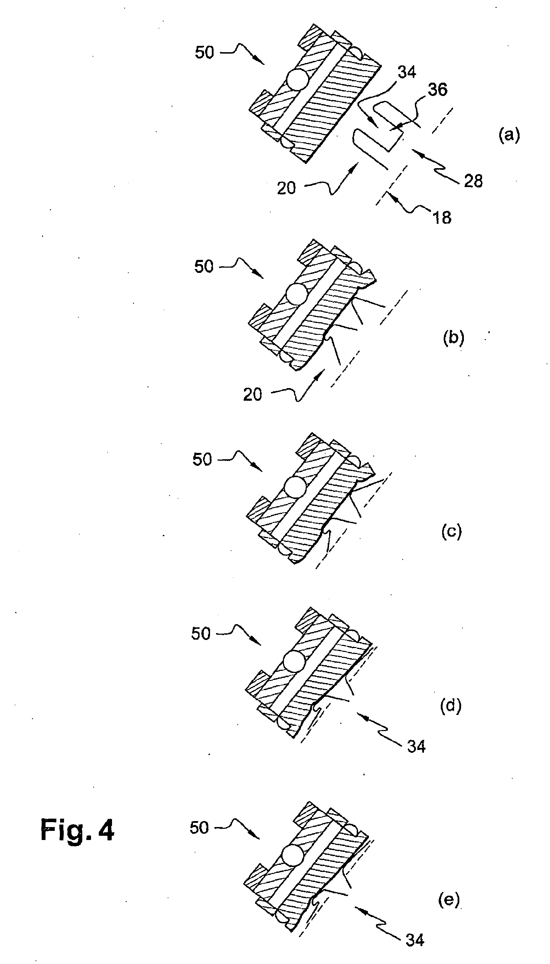

La figure 4 représente de manière schématique la déformation d'un absorbeur d'énergie suite à un choc hanche.

La hanche du piéton est ici représentée sous la forme d'un impacteur 50. Cet impacteur va percuter l'absorbeur d'énergie et plus particulièrement son corps 20. Sous l'effet du choc, les parois latérales 30 du corps 20 se replient sur elles-mêmes et la structure du corps 20 s'affaisse de manière à ce qu'au moins une partie du corps 20 de l'absorbeur pénètre dans l'ouverture 28 du support 18. Dans le mode de réalisation représenté ici, c'est l'enfoncement 34 qui traverse l'ouverture 28 du support 18. On obtiendra ainsi une déformation de l'absorbeur d'énergie sous effort quasi constant ce qui maximise l'énergie absorbée. Le volume résiduel de l'absorbeur d'énergie après compactage total de la structure est réduit au maximum.

L'invention ne se limite pas à la description des exemples de réalisation illustrés ci-dessus à titre non limitatif, mais englobe l'ensemble des variantes que l'homme du métier saura considérer à la lumière des revendications qui suivent.

## Revendications

1. Face avant (10) de véhicule automobile comportant au moins une armature présentant une traverse (14) et deux montants (12) **caractérisée en ce que** ladite face avant comporte au moins un absorbeur d'énergie, ledit absorbeur comportant un corps (20) et au moins un support (18), ledit corps (20) comportant une ou des parois (30) et étant assujetti audit support (18) et ledit support (18) comportant au moins une ouverture (28), **en ce que**, en cas de choc, la ou lesdites parois (30) sont aptes à se replier sur elles-mêmes de façon à autoriser la pénétration d'au moins une partie du corps (34) dans ladite ouverture (28) dudit support (18) et **en ce que** ledit absorbeur est assujetti à ladite armature de manière à permettre une orientation incliné dudit absorbeur de choc par rapport à un plan défini par ladite traverse (14) et lesdits montants (12).

2. Face avant selon la revendication 1, dans laquelle ledit corps (20) comporte au moins deux parois dites transversales (30), sensiblement parallèles entre elles et une troisième paroi (32) reliant lesdites parois transversales.

3. Face avant selon la revendication 1 ou 2, dans laquelle ledit corps (20) comporte au moins une face ouverte, ladite face ouverte étant en vis-à-vis dudit support (18).

4. Face avant selon la revendication 2 ou 3, dans laquelle ladite troisième paroi (32) forme un couvercle dudit corps et comporte au moins un enfoncement (34) en direction de ladite ouverture (28) dudit support (18), ledit enfoncement (34) comportant au moins une paroi latérale réalisée en continuité de matière avec la paroi dudit couvercle (32) et ledit enfoncement (34) est apte à passer dans l'ouverture dudit support lors du repliement desdites parois (30) sur elles-mêmes.

5. Face avant selon la revendication 4, dans laquelle ledit enfoncement (34) est de forme cylindrique.

6. Face avant selon l'une des revendications précédentes, dans laquelle ledit enfoncement (34) est équidistant desdites parois transversales (30).

7. Face avant selon l'une des revendications précédentes, dans laquelle ledit enfoncement (34) comporte au moins un ajour (36).

8. Face avant selon la revendication précédente, dans laquelle ledit ajour (36) est situé sur la paroi latérale dudit enfoncement.

9. Face avant selon l'une des revendications précédentes, dans laquelle ledit corps (20) comporte deux autres parois (33) reliant les extrémités des deux parois transversales (30) et dans laquelle au moins une desdites parois transversales (30) et/ou autres parois (33) comporte au moins un évidement.

10. Face avant selon l'une des revendications précédentes, dans laquelle lesdites parois transversales (30) sont ondulées de manière à former une alternance de crêtes (38) et de creux (40).

11. Face avant selon la revendication précédente, dans laquelle les parois transversales forment une succession d'ogives (44).

12. Face avant selon la revendication précédente, dans laquelle les crêtes (38) de chaque paroi transversale (30) sont en vis-à-vis les unes des autres.

13. Face avant selon la revendication précédente, dans laquelle ledit enfoncement (34) est situé au droit de deux creux (40) desdites parois transversales (30), lesdits deux creux (40) étant en vis-à-vis l'un de l'autre.

14. Face avant selon l'une des revendications précédentes, dans laquelle est prévu des moyens de fixation (42) dudit corps (20) audit support (18).

15. Face avant selon la revendication précédente, dans laquelle ledit absorbeur comprend au moins deux dits enfoncements (34) et dans laquelle lesdits au moins deux enfoncements (34) sont reliés par une nervure (48).

## Claims

1. Front face (10) of an automotive vehicle comprising at least one framework having a crossmember (14) and two uprights (12), said front face being **characterized in that** it comprises at least one energy absorber, said absorber comprising a body (20) and at least one mounting (18), said body (20) comprising one or more walls (30) and being fixed to said mounting (18), and said mounting (18) comprising at least one opening (28); **in that**, in an impact, said wall or walls (30) are designed to fold up on itself (themselves) in such a way as to allow at least part of the body (34) to enter said opening (28) in said mounting (18); and **in that** said absorber is fixed to said framework in such a way as to allow said impact absorber to be oriented at an angle relative to a plane defined by said crossmember (14) and said uprights (12).

2. Front face according to Claim 1, in which said body (20) comprises at least two so-called transverse walls (30) approximately parallel to each other, and a third wall (32) connecting said transverse walls.

3. Front face according to Claim 1 or 2, in which said body (20) comprises at least one open face, said open face being towards said mounting (18).

4. Front face according to Claim 2 or 3, in which said third wall (32) forms a cover of said body and comprises at least one depression (34) leading towards said opening (28) in said mounting (18), said depression (34) comprising at least one side wall made with continuity of material with the wall of said cover (32) and said depression (34) is designed to pass into the opening of said mounting when said walls (30) fold up on themselves.

5. Front face according to Claim 4, in which said depression (34) is cylindrical.

6. Front face according to one of the preceding claims, in which said depression (34) is equidistant from said transverse walls (30).

7. Front face according to one of the preceding claims, in which said depression (34) comprises at least one hole (36).

8. Front face according to the preceding claim, in which said hole (36) is situated on the side wall of said depression.

9. Front face according to one of the preceding claims, in which said body (20) comprises two other walls (33) connecting the ends of the two transverse walls (30), and in which at least one of said transverse walls (30) and/or other walls (33) comprises at least one opening.

10. Front face according to one of the preceding claims, in which said transverse walls (30) are undulated in such a way as to form an alternation of peaks (38) and troughs (40).

11. Front face according to the preceding claim, in which the transverse walls form a series of ogives (44).

12. Front face according to the preceding claim, in which the peaks (38) of each transverse wall (30) are directly opposite each other.

13. Front face according to the preceding claim, in which said depression (34) is situated between two troughs (40) of said transverse walls (30), said two troughs (40) being directly opposite each other.

14. Front face according to one of the preceding claims, in which means (42) are provided for fixing said body (20) to said mounting (18).

15. Front face according to the preceding claim, in which said absorber comprises at least two such depressions (34) and in which said at least two depressions (34) are connected by a rib (48).

## Patentansprüche

1. Vorderseite (10) eines Kraftfahrzeugs, die mindestens eine Armierung aufweist, die einen Querbalken (14) und zwei Streben (12) aufweist, **dadurch gekennzeichnet, dass** die Vorderseite mindestens einen Energieabsorbierer aufweist, wobei der Absorbierer einen Körper (20) und wenigstens einen Träger (18) aufweist, wobei der Körper (20) eine oder mehrere Wände (30) umfasst und mit dem Träger (18) verbunden ist, und wobei der Träger (18) mindestens eine Öffnung (28) aufweist, und dadurch, dass sich bei einem Aufprall die eine oder die mehreren Wände (30) auf sich selbst derart zurückfalten können, dass sie das Eindringen mindestens eines Teils des Körpers (34) in die Öffnung (28) des Trägers (18) gestatten, und dass der Absorbierer mit der Armierung derart verbunden ist, dass er eine schräge Ausrichtung des Schockabsorbierers in Bezug zu einer Ebene erlaubt, die von dem Querbalken (14) und den Streben (12) definiert ist.

2. Vorderseite nach Anspruch 1, bei der der Körper (20) mindestens zwei so genannte Querwände (30), die im Wesentlichen zueinander parallel sind, aufweist, und eine dritte Wand (32), die die Querwände verbindet.

3. Vorderseite nach Anspruch 1 oder 2, bei der der Körper (20) mindestens eine offene Seite aufweist, wobei die offene Seite dem Träger (18) gegenüber liegt.

4. Vorderseite nach Anspruch 2 oder 3, bei der die dritte Wand (32) einen Deckel des Körpers bildet und mindestens eine Einsenkung (34) in Richtung der Öffnung (28) des Trägers (18) aufweist, wobei die Einsenkung (34) mindestens eine Seitenwand aufweist, die in einem Stück mit der Wand des Deckels (32) hergestellt ist, und wobei die Einsenkung (34) beim Zurückfalten der Wände (30) auf sich selbst in die Öffnung des Trägers übergehen kann.

5. Vorderseite nach Anspruch 4, bei der die Einsenkung (34) zylindrisch ist.

6. Vorderseite nach einem der vorhergehenden Ansprüche, bei der die Einsenkung (34) von den Querwänden (30) gleich beabstandet ist.

7. Vorderseite nach einem der vorhergehenden Ansprüche, bei der die Einsenkung (34) mindestens einen Durchbruch (36) aufweist.

8. Vorderseite nach dem vorhergehenden Anspruch, bei der der Durchbruch (36) auf der Seitenwand der Einsenkung liegt.

9. Vorderseite nach einem der vorhergehenden Ansprüche, bei der der Körper (20) zwei weitere Wände (33) aufweist, die die Enden der zwei Querwände (30) verbinden, und bei der mindestens eine der Querwände (30) und/oder andere Wände (33) mindestens eine Aussparung aufweisen.

10. Vorderseite nach einem der vorhergehenden Ansprüche, bei der die Querwände (30) derart wellig sind, dass sie einen Wechsel von Gipfeln (38) und von Tälern (40) bilden.

11. Vorderseite nach dem vorhergehenden Anspruch, bei dem die Querwände eine Abfolge von Spitzbögen (44) bilden.

12. Vorderseite nach dem vorhergehenden Anspruch, bei dem die Gipfel (38) jeder Querwand (30) einander gegenüberliegen.

13. Vorderseite nach dem vorhergehenden Anspruch, bei der die Einsenkung (34) im rechten Winkel zu zwei Vertiefungen (40) der Querwände (30) liegt, wobei die zwei Vertiefungen (40) einander gegenüberliegen.

14. Vorderseite nach einem der vorhergehenden Ansprüche, bei der Mittel (42) zum Befestigen des Körpers (20) an dem Träger (18) vorgesehen sind.

15. Vorderseite nach dem vorhergehenden Anspruch, bei der der Absorbierer mindestens zwei Einsenkungen (34) aufweist, und bei der die mindestens zwei Einsenkungen (34) durch eine Rippe (48) verbunden sind.
